# EUROPEAN PATENT APPLICATION

(11) **EP 4 810 983 A1**
(43) Date of publication of application: **23.09.2026**
(21) Application number: 26165930.4
(22) Date of filing: 19.03.2026
(51) Int. Cl.: G01S 7/02, G01S 13/931

(54) **BRACKET FOR FIXING RADAR DEVICE**

(30) Priority: 20.03.2025 KR 20250035701
(71) Applicant: bitsensing Inc, Seongnam-si, Gyeonggi-do 13105 (KR)
(72) Inventor: KWON, Hyuk Jae, 08275 Seoul (KR); KIM, Dong Hui, 14067 Anyang-si, Gyeonggi-do (KR); LEE, Dae Han, 21024 Incheon (KR)
(74) Representative: BCKIP Part mbB

(57) **Abstract**

A bracket for fixing a radar device includes a plate extending in a planar direction to correspond to one surface of the radar device; at least one fixing protrusion integrally formed with the plate, protruding from one surface of the plate, and having a protruding end bent in one direction parallel to the planar direction; at least one deformation lever disposed in the one direction with respect to at least one of the fixing protrusions, and having one end integrally formed with the plate and other end separated from the plate; and at least one coupling panel integrally formed with the plate, extending outwards from the plate, and having a coupling hole penetrating in a direction crossing the planar direction, wherein in the deformation lever, at least a portion of the other end protrudes from the one surface of the plate when pressure is released, and the other end is moved in a direction crossing the planar direction through elastic deformation as the pressure is applied.

## Description

### TECHNICAL FIELD

The present disclosure relates to a bracket for fixing a radar device installed on a vehicle.

### BACKGROUND

With recent advancements in the automotive industry, various Advanced Driver Assistance Systems (ADAS) are being developed to enhance vehicle safety and convenience. Radar technology is being introduced as a key component of these systems, playing a critical role in detecting obstacles or other vehicles around the vehicle and mitigating collisions.

In general, radar devices are installed at the front, rear, and sides of a vehicle. In particular, when installed at the front corners (left and right), they perform functions such as Blind Spot Detection (BSD) and Lane Change Assist (LCA). These radar devices are positioned inside a vehicle bumper for protection from the external environment and are fixed to a vehicle body with brackets to ensure stable attachment.

Conventional brackets primarily utilize simple screw-fastening or clip-coupling methods. However, these methods are not suitable for precise positional adjustment during assembly, and the radar devices may be subtly displaced or detached due to vibrations or impacts during vehicle operation. In particular, when a vehicle passes over road irregularities or undergoes abrupt directional changes, the radar devices may become displaced, leading to measurement errors and malfunction risks in ADAS functions.

Since some brackets are designed with consideration only for unidirectional fixing, the devices can be easily deformed by external forces applied from various directions. For example, when a radar device is subjected to an impact from a lateral or longitudinal direction, the bracket may fail to provide sufficient support, resulting in misalignment or detachment of the device.

To solve these problems, there is a demand for a new bracket capable of multidirectional fixing and stable maintenance of the radar device against external impacts and vehicle vibrations. In addition, there is a need for a design that enhances assembly convenience and reduces assembly complexity during vehicle manufacturing.

### SUMMARY

In view of the foregoing, the present disclosure is conceived to provide a bracket for a radar device capable of fixing the radar device in a simple and stable manner.

Also, the present disclosure is conceived to provide a bracket for a radar device having a multi-fixing structure that enables the radar device to be assembled to various types of equipment.

The problems to be solved by the present disclosure are not limited to the above-described problems. There may be other problems to be solved by the present disclosure.

According to an exemplary embodiment, a bracket for fixing a radar device may include a plate extending in a planar direction to correspond to one surface of the radar device; at least one fixing protrusion integrally formed with the plate, protruding from one surface of the plate, and having a protruding end bent in one direction parallel to the planar direction; at least one deformation lever disposed in the one direction with respect to at least one of the fixing protrusions, and having one end integrally formed with the plate and other end separated from the plate; and at least one coupling panel integrally formed with the plate, extending outwards from the plate, and having a coupling hole penetrating in a direction crossing the planar direction, wherein in the deformation lever, at least a portion of the other end protrudes from the one surface of the plate when pressure is released, and the other end is moved in a direction crossing the planar direction through elastic deformation as the pressure is applied.

According to an embodiment of the present disclosure, a bracket for fixing a radar device is capable of fixing the radar device in a simple and stable manner through elastic deformation. Accordingly, it is possible to reduce assembly complexity and operation time, and to induce precise alignment during assembly.

Furthermore, the bracket for fixing a radar device according to an embodiment of the present disclosure has a multi-fixing structure that enables the radar device to be assembled to various types of equipment. Accordingly, the bracket can be applied to various vehicle structures and mounting environments, thereby increasing installation flexibility.

### BRIEF DESCRIPTION OF THE DRAWINGS

In the detailed description that follows, embodiments are described as illustrations only since various changes and modifications will become apparent to a person with ordinary skill in the art from the following detailed description. The use of the same reference numbers in different figures indicates similar or identical items.
**FIG. 1** is a top perspective view of a bracket for fixing a radar device according to an embodiment of the present disclosure.
**FIG. 2** is a bottom perspective view of the bracket for fixing a radar device according to an embodiment of the present disclosure.
**FIG. 3** is a top view of the bracket for fixing a radar device according to an embodiment of the present disclosure.
**FIG. 4** is a bottom view of the bracket for fixing a radar device according to an embodiment of the present disclosure.
**FIG. 5** is a side view of the bracket for fixing a radar device according to an embodiment of the present disclosure.
**FIG. 6** is a front view of the bracket for fixing a radar device according to an embodiment of the present disclosure.
**FIG. 7** illustrates a state where the bracket for fixing a radar device is coupled to the radar device according to an embodiment of the present disclosure.
**FIG. 8** illustrates a process of coupling the radar device to the bracket according to various embodiments of the present disclosure.

### DETAILED DESCRIPTION

Hereinafter, embodiments of the present disclosure will be described in detail with reference to the accompanying drawings to be readily implemented by a person with ordinary skill in the art to which the present disclosure belongs. However, it is to be noted that the present disclosure is not limited to the example embodiments but can be embodied in various other ways. In the drawings, parts irrelevant to the description are omitted in order to clearly explain the present disclosure, and like reference numerals denote like parts through the whole document.

Through the whole document, when a member is said to be located "on" another member, this includes not only the case where the member is in contact with the other member, but also the case where another member exists between the two members.

Through the whole document, when a part "comprises or includes" a certain components, this means that it may further include other components rather than excluding other components unless specifically stated to the contrary.

As used through the whole document, the terms "about", "substantially", etc. are used to mean at or close to that value when manufacturing and material tolerances inherent to the stated meaning are presented, it is used to prevent unscrupulous infringers from taking unfair advantage of disclosures in which precise or absolute figures are mentioned to help understanding of the present disclosure. The term "step of" as used through the whole document does not mean "step for."

Throughout the whole document, the term "combination(s) of" included in Markush type description means mixture or combination of one or more components, steps, operations and/or elements selected from a group consisting of components, steps, operation and/or elements described in Markush type and thereby means that the disclosure includes one or more components, steps, operations and/or elements selected from the Markush group.

Through the whole document, references to "A and/or B" mean "A or B, or A and B."

Hereinafter, embodiments of the present disclosure will be described in detail with reference to the accompanying drawings. However, the present disclosure may not be limited to these implementations, examples, and drawings.

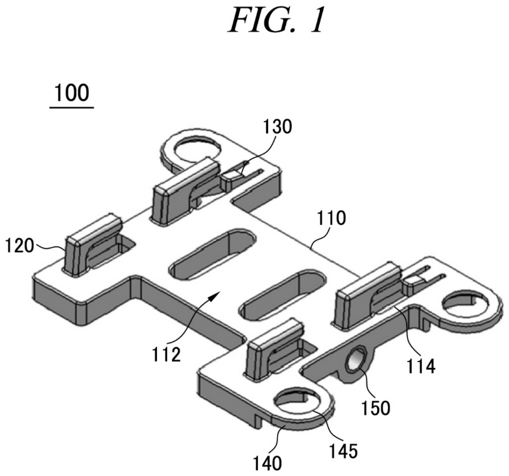

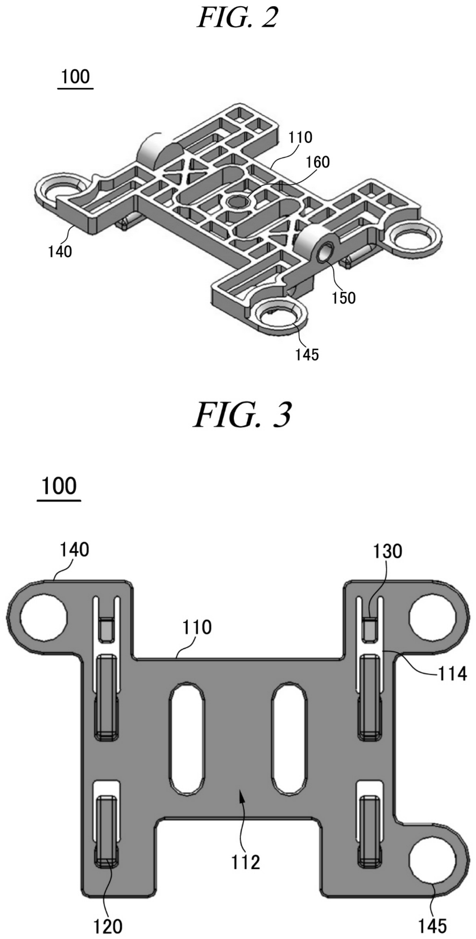

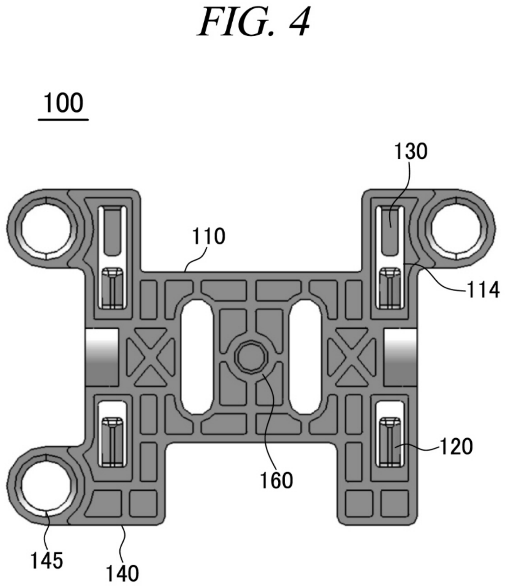

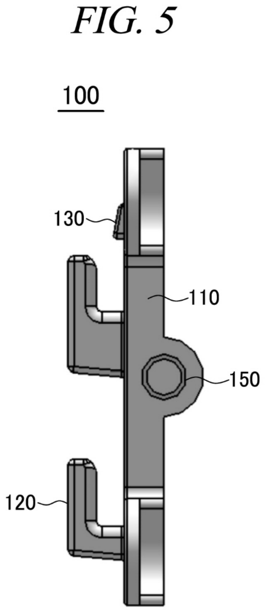

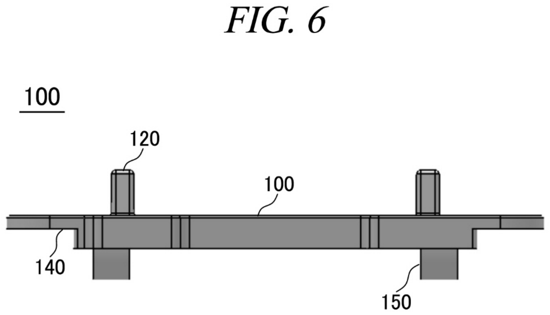

**FIG. 1** is a top perspective view of a bracket 100 for fixing a radar device (hereinafter, referred to as a "fixing bracket 100") according to an embodiment of the present disclosure. **FIG. 2** is a bottom perspective view of the fixing bracket 100 according to an embodiment of the present disclosure. **FIG. 3** is a top view of the fixing bracket 100 according to an embodiment of the present disclosure. **FIG. 4** is a bottom view of the fixing bracket 100 according to an embodiment of the present disclosure. **FIG. 5** is a side view of the fixing bracket 100 according to an embodiment of the present disclosure. **FIG. 6** is a front view of the fixing bracket 100 according to an embodiment of the present disclosure.

Referring to **FIG. 1** to **FIG. 6****,** the fixing bracket 100 according to an embodiment may include: a plate 110 extending in a planar direction to correspond to one surface of the radar device; at least one fixing protrusion 120 integrally formed with the plate 110, protruding from one surface 112 of the plate 110, and having a protruding end bent in one direction parallel to the planar direction; at least one deformation lever 130 disposed in the one direction with respect to at least one of the fixing protrusions 120, and having one end integrally formed with the plate 110 and the other end separated from the plate 110; and at least one coupling panel 140 integrally formed with the plate 110, extending outward from the plate 110, and having a coupling hole 145 penetrating in a direction crossing the planar direction.

In the deformation lever 130 according to an embodiment, at least a portion of the other end may protrude from the one surface 112 of the plate 110 when pressure is released, and the other end may move in the direction crossing the planar direction through elastic deformation as pressure is applied.

The fixing bracket 100 according to an embodiment may be configured to stably fix the radar device inside a vehicle bumper or at other mounting positions. In one embodiment, the radar device may be disposed at a front corner of the vehicle, and the fixing bracket 100 may be fixed inside the bumper to fix the radar device.

The fixing bracket 100 according to an embodiment may include the plate 110 extending in the planar direction. The plate 110 according to an embodiment is a main structure supporting the radar device, and a plurality of fixing protrusions 120 and deformation levers 130 may be formed thereon.

In the plate 110 according to an embodiment, a plurality of components may be formed on an upper surface 112 and a lower surface, respectively. In one embodiment, a plurality of openings may be formed in the plate 110 to reduce weight and manufacturing cost. In one embodiment, reinforcement ribs may be formed on the lower surface of the plate 110 to ensure structural rigidity.

A plurality of insertion holes 114 may be formed in the plate 110 according to an embodiment to provide a space for elastic deformation of the deformation levers 130. In one embodiment, the insertion holes 114 allow elastic deformation of the deformation levers 130, thereby facilitating assembly of the radar device.

In the plate 110 according to an embodiment, the insertion holes 114 may be formed at positions corresponding to the deformation levers 130 and may penetrate in the direction crossing the planar direction (*e.g.*, a depth direction of the plate 110), thereby allowing insertion through elastic deformation of the deformation levers 130. In one embodiment, the insertion holes 114 may be formed corresponding to the shape and/or size of the deformation levers 130 and to a movement path defined by elastic deformation of the deformation levers 130.

The at least one fixing protrusion 120 according to an embodiment may be integrally formed with the plate 110, protruding from the one surface 112 of the plate 110, and having a protruding end bent in one direction parallel to the planar direction.

The at least one fixing protrusion 120 according to an embodiment may restrict movement of the radar device in the direction crossing the planar direction when the radar device is positioned at a predetermined fixed position.

In one embodiment, at least a portion of the radar device extends in a direction corresponding to the planar direction of the plate 110 and may be slidably inserted under the bent end of the at least one fixing protrusion 120. Accordingly, the portion of the radar device extending in the planar direction is supported downward by the bent end of the at least one fixing protrusion 120 to restrict upward movement.

According to an embodiment, at least three fixing protrusions 120 may be provided and arranged to be spaced apart from each other in the one direction and a direction crossing the one direction. In one embodiment, four fixing protrusions 120 may be provided and arranged to be spaced apart from each other in a bending direction (*e.g.*, the one direction) parallel to the planar direction of the plate 110, or may alternatively be spaced apart from each other in a direction crossing the bending direction.

The at least one deformation lever 130 according to an embodiment may be disposed corresponding to at least one of the fixing protrusions 120. In one embodiment, the at least one deformation lever 130 may be disposed on at least one side of the at least one fixing protrusion 120, respectively.

In the deformation lever 130 according to an embodiment, one end may be integrally formed with the plate 110 and the other end may be separated from the plate 110. In one embodiment, the other end of the deformation lever 130 may be rotatable about the one end fixed to the plate 110 by external forces.

The deformation lever 130 according to an embodiment extends in one direction parallel to the bending direction of the at least one fixing protrusion 120, and the one end may be located in the one direction of the other end. That is, the other end of the deformation lever 130 may be disposed adjacent to the at least one fixing protrusion 120, and the one end fixed to the plate 110 may be disposed on the opposite side of the at least one fixing protrusion 120.

In the deformation lever 130 according to an embodiment, at least a portion of the other end may protrude from the one surface 112 of the plate 110 when pressure is released. In one embodiment, the other end of the deformation lever 130 may be moved in the direction crossing the planar direction through elastic deformation as pressure is applied. In one embodiment, the other end of the deformation lever 130 may be inserted into the insertion hole 114 of the plate 110 through elastic deformation and may overlap the plate 110 so as not to protrude from the one surface 112 of the plate 110.

The deformation lever 130 according to an embodiment is elastically deformed by applied pressure as the radar device is positioned at a predetermined sliding position, and when the pressure is released as the radar device slides from the predetermined sliding position to a predetermined fixed position, at least a portion of the other end protrudes from the one surface 112 of the plate 110 due to an elastic force to restrict sliding of the radar device.

According to an embodiment, at least two deformation levers 130 may be provided and arranged to be spaced apart from each other in a direction crossing the one direction. In one embodiment, a plurality of deformation levers 130 may be provided in a sliding direction of the radar device and in a direction crossing the bending and extension direction of the at least one fixing protrusion 120 to stably support the radar device.

In one embodiment, the at least one deformation lever 130 may be provided corresponding to some of the fixing protrusions 120. In another embodiment, the at least one deformation lever 130 may be provided corresponding to each of the at least one fixing protrusion 120.

The coupling panel 140 according to an embodiment is integrally formed with the plate 110 and extends outwards from the plate 110, and may include at least one coupling panel 140 having the coupling hole 145 penetrating in the direction crossing the planar direction.

In one embodiment, the coupling panel 140 may allow the fixing bracket 100 to be attached to an external frame or a vehicle structure through the coupling hole 145 penetrating in the direction crossing the planar direction.

In one embodiment, at least three coupling panels 140 may be provided and arranged to be spaced apart from each other in the one direction and a direction crossing the one direction. Accordingly, the fixing bracket 100 can be stably fixed to an external frame or a vehicle structure through the at least one coupling panel 140.

At least one first assembly hole 150 may be formed in the plate 110 according to an embodiment and may penetrate in a linear direction parallel to the planar direction of the plate 110, and, thus, the plate 110 can be fixedly coupled to another device.

In one embodiment, the at least one first assembly hole 150 may be formed extending in a direction crossing the one direction in which the at least one fixing protrusion 120 is bent and/or the one direction in which the at least one deformation lever 130 extends.

In one embodiment, at least two first assembly holes 150 may be provided and arranged to be spaced apart from each other in the linear direction in which they penetrate.

In one embodiment, the at least one first assembly hole 150 may allow the fixing bracket 100 to be laterally attached to an external frame or a vehicle structure.

At least one second assembly hole 160 may be formed in the plate 110 according to an embodiment and may extend in the direction crossing the planar direction from the other surface opposite to the one surface 112 of the plate 110, and, thus, the plate 110 can be fixedly coupled to another device.

In one embodiment, the at least one second assembly hole 160 may allow the fixing bracket 100 to be attached downwards to an external frame or a vehicle structure.

In one embodiment, the first assembly hole 150 and/or the second assembly hole 160 may penetrate the plate 110 or may be formed as a groove recessed in a portion of the plate 110. In one embodiment, screw threads may be formed on an inner surface of the first assembly hole 150 and/or the second assembly hole 160, and, thus, screws can be directly coupled thereto.

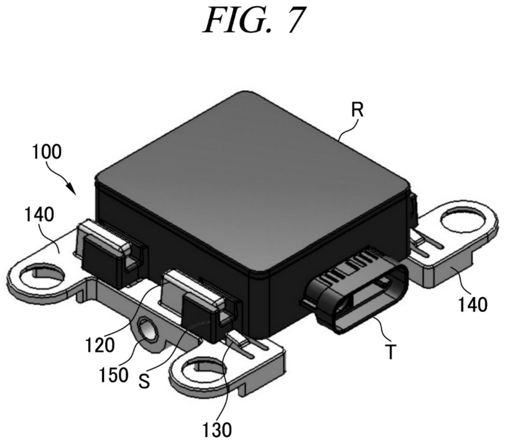

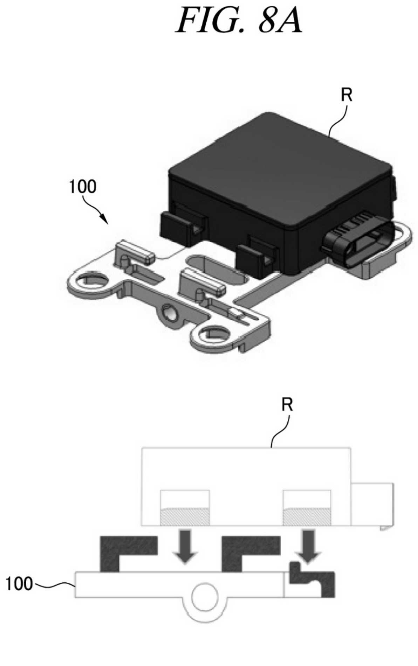

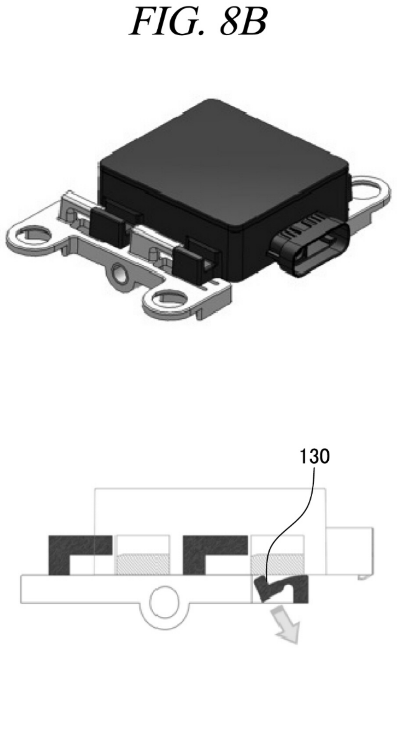

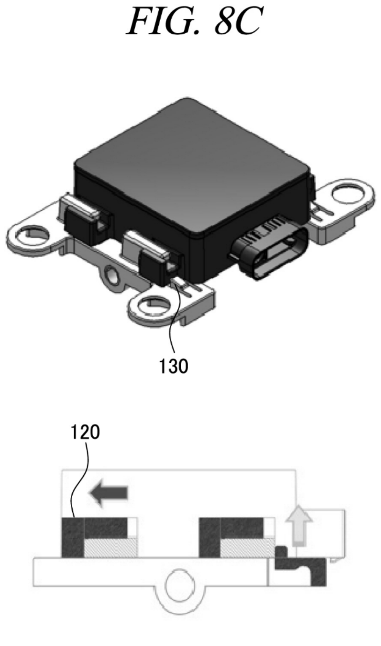

**FIG. 7** illustrates a state where the bracket 100 for fixing a radar device R is coupled to the radar device R according to an embodiment of the present disclosure. **FIG. 8** illustrates a process of coupling the radar device R to the fixing bracket 100 according to various embodiments of the present disclosure.

Referring to **FIG. 7** and **FIG. 8**, the deformation lever 130 according to an embodiment is elastically deformed by pressure, thereby fixing the radar device R.

In one embodiment, after the radar device R is aligned with the fixing protrusions 120 of the plate 110, the deformation lever 130 may be elastically deformed by applying a specific amount of pressure.

In one embodiment, as shown in **FIG. 8A** and **FIG. 8B**, when the radar device R is positioned at a predetermined sliding position, pressure is applied to the deformation lever 130, thereby elastically deforming the deformation lever 130.

In one embodiment, as the radar device R slides from the predetermined sliding position to a predetermined fixed position, the pressure on the deformation lever 130 is released. As the pressure is released, the deformation lever 130 may support the radar device R laterally to restrict sliding movement of the radar device R.

In one embodiment, as shown in **FIG. 8C**, when the radar device R reaches the predetermined fixed position of the fixing bracket 100, the deformation lever 130 returns to its original position, thereby fixing the radar device R. In one embodiment, at least a portion of the other end of the deformation lever 130 protrudes from one surface of the plate 110 due to an elastic force, thereby restricting sliding of the radar device R.

The other end of the deformation lever 130 according to an embodiment may be inclined such that its height from the one surface of the plate 110 decreases toward the one direction (*e.g.*, a direction away from the deformation lever 130) when pressure is released. In one embodiment, the other end of the deformation lever 130 may be inclined such that its height from the one surface of the plate 110 increases toward the deformation lever 130.

The other end of the deformation lever 130 according to an embodiment may protrude from the one surface of the plate 110 in a stepped manner when pressure is released.

According to the above configuration, the deformation lever 130 may be deformed such that it gradually moves downwards as the radar device R slides from the predetermined sliding position to the predetermined fixed position. Further, when the radar device R reaches the predetermined fixed position and elastic deformation is released, the deformation lever 130 can stably support the radar device R by a step formed on the one surface of the plate 110.

The fixing bracket 100 according to an embodiment may perform an automatic fixing function utilizing elastic deformation of the deformation lever 130, thereby enhancing assembly convenience. Further, the arrangement of the plurality of fixing protrusions 120 and insertion holes 114 may be optimized, thereby facilitating alignment of the radar device. Furthermore, the coupling panels 140 and the assembly holes 150 and 160 may be arranged in various configurations and thus may be applied to various vehicle models.

The above description of the present disclosure is provided for the purpose of illustration, and it would be understood by a person with ordinary skill in the art to which the present invention belongs that various changes and modifications may be made without changing technical conception and essential features of the present disclosure. Thus, it is clear that the above-described examples are illustrative in all aspects and do not limit the present disclosure. For example, each component described to be of a single type can be implemented in a distributed manner, likewise, components described to be distributed can be implemented in a combined manner.

The scope of the present disclosure is defined by the following claims rather than by the detailed description of the embodiment, and it should be understood that all modifications and embodiments conceived from the meaning and scope of the claims and their equivalents are included in the scope of the present disclosure.

## Claims

1. A bracket for fixing a radar device, comprising:
a plate extending in a planar direction to correspond to one surface of the radar device;
at least one fixing protrusion integrally formed with the plate, protruding from one surface of the plate, and having a protruding end bent in one direction parallel to the planar direction;
at least one deformation lever disposed in the one direction with respect to at least one of the fixing protrusions, and having one end integrally formed with the plate and the other end separated from the plate; and
at least one coupling panel integrally formed with the plate, extending outwards from the plate, and having a coupling hole penetrating in a direction crossing the planar direction,
wherein in the deformation lever, at least a portion of the other end protrudes from the one surface of the plate when pressure is released, and the other end moves in a direction crossing the planar direction through elastic deformation as the pressure is applied.

2. The bracket of Claim 1,
wherein the deformation lever is elastically deformed by applied pressure as the radar device is positioned at a predetermined sliding position, and when the pressure is released as the radar device slides from the predetermined sliding position to a predetermined fixed position, at least a portion of the other end protrudes from the one surface of the plate due to an elastic force to restrict sliding of the radar device.

3. The bracket of Claim 2,
wherein the at least one fixing protrusion restricts movement of the radar device in the direction crossing the planar direction when the radar device is positioned at the predetermined fixed position.

4. The bracket of Claim 1,
wherein the deformation lever extends in the one direction parallel to a bending direction of the at least one fixing protrusion, and the one end is located in the one direction of the other end.

5. The bracket of Claim 4,
wherein the other end of the deformation lever may be inclined such that its height from the one surface of the plate decreases toward the one direction when the pressure is released.

6. The bracket of Claim 1,
wherein in the plate, an insertion hole is formed at a position corresponding to the deformation levers and penetrates in a direction crossing the planar direction to allow insertion through elastic deformation of the deformation levers.

7. The bracket of Claim 1,
wherein at least three fixing protrusions are provided and arranged to be spaced apart from each other in the one direction and a direction crossing the one direction.

8. The bracket of Claim 1,
wherein at least two deformation levers are provided and arranged to be spaced apart from each other in a direction crossing the one direction.

9. The bracket of Claim 1,
wherein at least three coupling panels are provided and arranged to be spaced apart from each other in the one direction and a direction crossing the one direction.

10. The bracket of Claim 1,
wherein at least one first assembly hole is formed in the plate and penetrates in a linear direction parallel to the planar direction, and thus the plate is fixedly coupled to another device.

11. The bracket of Claim 10,
wherein at least two first assembly holes are provided and arranged to be spaced apart from each other in the linear direction.

12. The bracket of Claim 1,
wherein at least one second assembly hole is formed in the plate and extends in a direction crossing the planar direction from the other surface opposite to the one surface of the plate, and thus the plate is fixedly coupled to another device.
